# EUROPÄISCHE PATENTSCHRIFT

(11) **EP 3 066 749 B1**
(45) Veröffentlichungstag und Bekanntmachung des Hinweises auf die Patenterteilung: **21.02.2018**
(21) Anmeldenummer: 14793058.0
(22) Anmeldetag: 24.10.2014
(51) Int. Cl.: B23K 26/28, H02K 5/26, H02K 15/14, B23K 101/36, H02K 5/00, H02K 5/04

(54) **ELEKTRISCHE MASCHINE MIT EINEM BEFESTIGUNGSFLANSCH**
ELECTRIC MACHINE HAVING A MOUNTING FLANGE
MACHINE ÉLECTRIQUE COMPORTANT UNE BRIDE DE FIXATION

(30) Priorität: 05.11.2013 DE 102013222402
(43) Veröffentlichungstag der Anmeldung: 14.09.2016
(73) Patentinhaber: Robert Bosch GmbH, 70442 Stuttgart (DE)
(72) Erfinder: BAUER, Christian, 77886 Lauf (DE); KELLER, Thomas, 77815 Buehl (DE)
(86) Internationale Anmeldenummer: PCT/EP2014/072893
(87) Internationale Veröffentlichungsnummer: WO 2015/067487

(56) Entgegenhaltungen:
- EP-A2- 2 131 473

## Beschreibung

### Stand der Technik

Die Erfindung geht aus von einer elektrischen Maschine mit einem angeschweißten Befestigungsflansch und einem Verfahren, solch einen Befestigungsflansch an die elektrische Maschine anzubringen, nach Gattung der unabhängigen Ansprüche.

Es sind elektrische Maschinen mit einem Befestigungsflansch bekannt, wie sie in der DE102008002288 gezeigt sind. Bei dieser elektrischen Maschine liegt der Befestigungsflansch an einem Gehäuseteil der elektrischen Maschine an. Dabei erstreckt sich eine Anlagefläche in Axialrichtung und in Umfangsrichtung zwischen dem Befestigungsflansch und dem Gehäuseteil. Der Befestigungsflansch wird vorzugsweise durch Schrauben, Kleben oder Pressen an dem Gehäuseteil befestigt. Auf diese Weise kann jedoch keine kostengünstige Serienfertigung realisiert werden, da aufwendige Zusatzprozesse und Zusatzmaterialien bereitgestellt werden müssen. Ein Befestigungsflansch mit solch einer Anlagefläche ist zum Verschweißen mit dem Gehäuseteil ungeeignet, da beim Schweißverfahren entstehende Gase nicht entweichen können, ohne eine Schmelze einer Schweißnaht zu passieren. Durch diesen Prozess kommt es zu einer Minderung der Schweißnahtqualität, was z.B. zur Porosität der Schweißnaht führt. Insbesondere tritt dieser mangelhafte Prozess im Falle eines beschichteten Befestigungsflansches und/oder Gehäuseteils auf.

In der EP 2131473 A1 ist eine Vorrichtung gezeigt, die sich auf dem technischen Gebiet der vorliegenden Erfindung befindet.

### Offenbarung der Erfindung

### Vorteile der Erfindung

Die erfindungsgemäße Vorrichtung mit den Merkmalen des unabhängigen Anspruchs hat dem Stand der Technik gegenüber den Vorteil, dass lediglich eine Erhebung an einem Gehäuseteil der elektrischen Maschine anliegt. Somit wird ein Ausbilden einer sich in Axialrichtung und Umfangsrichtung erstreckenden Anlagefläche vermieden und ein zuverlässiges Verschweißen des Befestigungsflanschs mit dem Gehäuseteil ermöglicht. Dabei ist der Befestigungsflansch an einem - vorzugsweise zylinderförmigen- Gehäuseteil der elektrischen Maschine so angeordnet, dass der Befestigungsflansch das Gehäuseteil wenigstens abschnittsweise in Umfangsrichtung des Gehäuseteils umschließt. Auf diese Weise kann eine sichere und spielarme Positionierung des Befestigungsflansches erreicht werden. Der Befestigungsflansch wird vorteilhaft mittels eines Schweißverfahrens, wie Laserschweißen, an dem Gehäuseteil befestigt, was eine kostengünstige Serienfertigung sicherstellt. Weiter sind der Befestigungsflansch und/oder das Gehäuseteil beschichtet, was einen hohen Korrosionsschutz gewährleistet. Allerdings führt die Beschichtung beim Schweißen zu einer verminderten Schweißnahtqualität, da die Beschichtung bei Erwärmung zur Gasbildung neigt. Um dies zu verhindern, wird durch die Erhebung ein Spalt zwischen Befestigungsflansch und Gehäuseteil realisiert. Auf diese Weise haben Gase die Möglichkeit durch den Spalt zu entweichen. So können poröse Schweißnähte vermieden werden, da das Gas nicht die Schmelze der Schweißnaht passieren muss, um zu entweichen.

Durch die in den abhängigen Ansprüchen aufgeführten Maßnahmen sind vorteilhafte Weiterbildungen und Verbesserungen der im unabhängigen Anspruch angegebenen Vorrichtung möglich.

Vorteilhafter Weise erstreckt sich die Erhebung des Befestigungsflansches axial entlang des Gehäuseteils. Das führt zu einer sicheren Positionierung des Befestigungsflansches, da ein Verkippen des Befestigungsflansches gegen die Axialrichtung verhindert wird. Insbesondere ist es vorteilhaft, wenn die Erhebung annähernd linienförmig an dem Gehäuseteil anliegt, da es auf diese Weise zu keiner Ausbildung einer Anlagefläche zwischen Befestigungsflansch und Gehäuseteil kommt.

Vorteilhaft ist der Befestigungsflansch als Biege-Stanz-Teil ausgebildet. Die Fertigung des Befestigungsflansches aus einem Blechteil durch einen Kaltumformprozess erlaubt eine zuverlässige und kostengünstige Serienproduktion. Dabei wird die Erhebung einstückig aus dem Blechteil ausgeformt, sodass kein zusätzliches Material zur Ausbildung der Erhebung angebracht werden muss. Da die Erhebung aus dem Blechteil ausgeformt wird, kann die Erhebung vorteilhaft während des Kaltumformprozesses des Blechteils -insbesondere durch Stanzen, Biegen, Prägen- ausgeformt werden. Somit muss keine Nachbearbeitung des Blechbiegeteils erfolgen.

Vorteilhaft weist das Gehäuseteil eine Erhebung auf, die sich axial entlang des Gehäuseteils erstreckt und die an dem Befestigungsflansch anliegt, und insbesondere liegt die Erhebung annähernd linienförmig an Befestigungsflansch an, was auf kostengünstig Weise eine hohe Schweißnahtqualität gewährt.

Der Befestigungsflansch weist einen ringförmigen Kragen auf, der das Gehäuseteil in Umfangsrichtung geschlossen oder abschnittsweise umsäumt, wobei sich der Kragen als Manschette axial entlang des Gehäuses erstreckt. Diese vorteilhafte Gestaltung des Kragens ermöglicht eine exakte Ausrichtung des Befestigungsflanschs an dem Gehäuseteil. Die Erhebung, welche aus dem Kragen ausgeformt ist, gewährleistet die vorteilhafte Ausbildung eines Spaltes zwischen dem Kragen und dem Gehäuseteil, wobei sich der Spalt in Umfangsrichtung und/oder in Axialrichtung erstreckt, sodass genügend Raum zum Entweichen der Gase zur Verfügung steht. Auf diese Weise wird eine hohe Schweißnahtqualität gewährleistet.

Zweckmäßiger Weise weist der Kragen einen Stanzgrat an einem axialen Ende auf. An dem Stanzgrat wird mittels Laserschweißen vorteilhaft eine Schweißnaht angebracht. Der Stanzgrat ermöglicht es die Schweißnaht exakt und zuverlässig anzubringen, da der Stanzgrat einen sich zum Gehäuseteil hin erstreckenden Fortsatz darstellt. So wird für die Schweißnaht mehr Material zum Verschweißen dargeboten, jedoch ohne das Gehäuseteil zu berühren. Dadurch wird der Befestigungsflansch an dem Gehäuseteil unter Gewährleistung einer hohen Schweißnahtqualität befestigt, da die beim Schweißen entstehenden Gase entweichen können.

Der Befestigungsflansch wird mittels wenigstens einer Schweißnaht an wenigstens einem axialen Ende des Kragens am Gehäuseteil befestigt. Zusätzlich kann mittels wenigstens einer Überlappschweißnaht, die an einer Erhebung angebracht wird, der Kragen vorteilhaft am Gehäuseteil befestigt werden. Dabei wird das Schweißwerkzeug insbesondere radial zur Umfangsrichtung von außen an die Erhebung herangeführt, sodass sich die fertiggestellte Überlappschweißnaht radial vom Blech der Erhebung bis in das Gehäuseteil erstreckt. Das Anbringen von Schweißnähten an den Erhebungen und/oder dem Kragen bieten einen besonders festen Sitz des Befestigungsflansches auf dem Gehäuseteil, da dadurch vorteilhaft Zug- und Scherkräften entgegengewirkt wird. Wenn der Abstand zwischen den Erhebungen kleiner gewählt wird als ein Durchmesser des Gehäuseteils, dann kann der Befestigungsflansch auf dem Gehäuseteil vorfixiert werden. So kann ein zuverlässiges anbringen der Schweißnähte gewährleistet werden.

Der Kragen weist wenigstens zwei Erhebungen auf, wobei die Erhebungen durch einen Winkel in Umfangsrichtung voneinander getrennt sind. So kann mittels mehrerer Erhebungen zuverlässig ein vorteilhafter Spalt zwischen Kragen und Gehäuseteil erzeugt werden. Die Schweißnaht verläuft dabei an einem Ende des Kragens zwischen den Erhebungen. Auf diese Weise kann das Gas, welches durch das Schweißen entsteht, durch den Spalt, der sich zwischen den Erhebungen in Umfangsrichtung erstreckt, abgeführt werden. Vorzugsweise kann entlang der in Umfangsrichtung verlaufenden Schweißnaht wenigstens eine Erhebung angeordnet sein. Dabei kann die Schweißnaht in Umfangsrichtung geschlossen sein. Das bietet eine vorteilhafte maximale Festigkeit der Verbindung zwischen Befestigungsflansch und Gehäuseteil.

Auf vorteilhafte Weise weist der Befestigungsflansch an einer radial innenliegenden Kragenkante an einem ersten Ende und/oder an einem zweiten Ende des Kragens einen Radius oder eine Fase auf. Dadurch ist ein Innendurchmesser des Kragens, der axial ganz außen an dessen Ende angeordnet ist, größer als der Innendurchmesser, der axial weiter beabstandet ist von dem Ende. Dabei ist der Radius oder die Fase auch an wenigstens einem axialen Ende der Erhebung angeformt. Weiter weist ein Gehäuse der elektrischen Maschine, welches das Gehäuseteil aufweist, an einer radial außenliegenden Gehäusekante einen Radius oder eine Fase auf. Das Anformen des Radius oder der Fase an dem Befestigungsflansch und/oder dem Gehäuse erleichtert auf vorteilhafter Weise die Montage des Befestigungsflansches auf das Gehäuse. Damit kann eine Beschädigung der Beschichtung des Flansches und/oder des Gehäuses vermieden werden.

Der Befestigungsflansch weist -insbesondere an dem ersten Ende- wenigstens einen sich radial nach außen erstreckenden Fortsatz auf, sodass der Fortsatz quer zum Kragen angeordnet ist. Dabei weist der Fortsatz Aufnahmen für Schrauben, Nieten und/oder Stifte auf. Der Fortsatz ermöglicht es den Befestigungsflansch vorteilhaft an einer Verstellvorrichtung, wie einem Getriebesteller, oder an der Karosserie zu befestigen. Vorzugsweise ist zwischen Kragen und Fortsatz ein Bund angeordnet, wobei insbesondere der Bund und der Fortsatz in zwei unterschiedlichen Ebenen liegen. Das wird erreicht, indem man den Fortsatz kröpft.

Die vorteilhafte elektrische Maschine mit einem Befestigungsflansch wird in Kraftfahrzeugen als Stellmotor, in Antiblockiersystem (ABS), in Elektronisches Stabilitätsprogramm (ESP) und/oder als Motor in einem Kühlsystem verwendet. Da die erfindungsgemäßen Schweißnähte von vorteilhaft guter Qualität sind, gewährleistet die elektrische Maschine eine hohe Betriebssicherheit und eine effiziente Funktion eines Kraftfahrzeugs.

Das erfindungsgemäße Verfahren mit den Merkmalen des unabhängigen Anspruchs hat dem Stand der Technik gegenüber den Vorteil, dass es eine kostengünstige und einfache Serienfertigung einer elektrischen Maschine ermöglicht. So weist das erfindungsgemäße Verfahren die folgenden vorteilhaften Schritte auf, wobei deren Vorteile sich entsprechend der gleichen Merkmale der Vorrichtung in den zugehörigen Vorrichtungsvorteilen wiederspiegeln:
- Positionieren eines Befestigungsflansches an einer elektrischen Maschine, sodass ein Kragen mit Erhebungen an einem Gehäuseteil angeordnet ist, wobei nur die Erhebungen an dem Gehäuseteil anliegen
- Anbringen von wenigstens einer Schweißnaht an wenigstens einem axialen Ende des Kragens und/oder Anbringen der Schweißnaht an einer Erhebung des Befestigungsflansches -wobei die Schweißnaht insbesondere radial zur Umfangsrichtung von außen angebracht wird.

Die abhängigen Verfahrensansprüche zeigen vorteilhafte Maßnahmen und Variationen des unabhängigen Verfahrensanspruchs, die zu einer Verbesserung dieses Anspruchs dienen. So ist der Befestigungsflansch bevorzugt mittels Laserschweißen, an dem Gehäuseteil befestigt. Durch Verwendung solcher Schweißverfahren ist ein Zuführen von Zusatzmaterial, z.B. in Form von Draht, Gas oder Pulver wie beim Lichtbogenschweißen oder Schutzgasschweißen, nicht notwendig. Dies führt zu einer Vereinfachung des Fertigungsprozesses.

Bei einer vorteilhaften Variation des Verfahrens wird die Schweißnaht als eine Stumpfstoßnaht ausgeführt. Bei der Stumpfstoßnaht sind das axiale Ende des Befestigungsflanschs und eines Gehäuses bündig angeordnet. Eine durch das Schweißverfahren entstandene Schmelze wird dabei, z.B. durch die Kapillarkraft oder die Erdanziehungskraft, vollständig zwischen den Kragen und das Gehäuseteil gezogen, ohne dass die Schmelze den Kragen oder das Gehäuseteil in Axialrichtung überragt. So bleiben keine störenden wulstartigen Schweißnähte stehen, die sich nachteilig auf die Montage der elektrischen Maschine auswirken. Weiter ist es möglich die Schweißnaht als eine Kehlnaht auszuführen. Bei der Kehlnaht überragt das Gehäuse und/oder das Gehäuseteil das axiale Ende oder das axiale Ende das Gehäuse und/oder das Gehäuseteil in Axialrichtung. Bei der Kehlnaht wird die Schmelze nicht vollständig zwischen den Kragen und das Gehäuseteil gezogen und die Schweißnaht bildet sich radiusförmig zwischen dem Kragen und dem Gehäuseteil aus. Dadurch wird eine möglichst hohe Festigkeit der Schweißnaht erreicht. Dabei bildet sich die Kehlnaht und die Stumpfstoßnaht konvex und/oder konkav zwischen dem Kragen und dem Gehäuseteil aus. Die Schweißnaht ist auch als eine Überlappschweißnaht an der Erhebung realisierbar. Die Überlappschweißnaht zeichnet sich durch einen überlappenden Kontaktbereich zwischen dem Gehäuseteil und der Erhebung aus. Die Überlappschweißnaht wird von außen an einem überlappenden Kontaktbereich der Erhebung und des Gehäuseteils angebracht. Auf diese Weise wird der linienförmige Kontaktbereich zwischen der Erhebung und dem Gehäuseteil aufgeschmolzen und die dabei entstehenden Gase können optimal in den benachbarten Spalt entweichen.

Beim Laserschweißen wird ein Laser vorteilhaft gegen eine Motorachse um einen Winkel geschwenkt. Die Motorachse erstreckt sich in Axialrichtung. Dabei bilden der Laserstrahl und die Motorachse einen Schweißwinkel von 10° bis 90° - aber vorzugsweise für eine Kehlnaht von 30° bis 40°. Diese Verfahrensvariation ermöglicht eine präzise und vorhersagbare Ausgestaltung der Schweißnähte.

Zweckmäßige Weise wird der Befestigungsflansch aus einem kaltumgeformten Blechteil gefertigt, das insbesondere größtenteils mittels einem Tiefziehverfahren und/oder einem spanenden Verfahren gefertigt ist. Dabei ist wenigstens eine Erhebung aus dem Kragen ausgeformt, sodass die Erhebung einstückig mit dem Befestigungsflansch ausgebildet ist. Die Vorteile dieser Verfahrensvariante sind gleich denen der entsprechenden Vorrichtungsvariante. Der Befestigungsflansch und/oder das Gehäuseteil weisen eine Beschichtung auf, die vorzugsweise Zinn, Zink, Nickel, Chrom, Kupfer. Die Beschichtung dient zur Korrosionsverhinderung. Dabei sind Zinn, Zink, Nickel, Chrom, Kupfer hervorragend mittels eines galvanischen Verfahrens auf den Befestigungsflansch und/oder das Gehäuseteil bzw. Gehäuse auftragbar.

### Kurze Beschreibung der Zeichnungen

Ausführungen der Erfindung sind in den Zeichnungen dargestellt und in der nachfolgenden Beschreibung näher erläutert.

Es zeigen:
Figur 1: ein Querschnitt einer erfindungsgemäßen elektrischen Maschine mit angeschweißtem Befestigungsflansch
Figur 2: ein Radialschnitt einer erfindungsgemäßen elektrischen Maschine mit angeschweißtem Befestigungsflansch
Figur 3: elektrische Maschine mit angeordnetem Befestigungsflansch

### Ausführungsformen der Erfindung

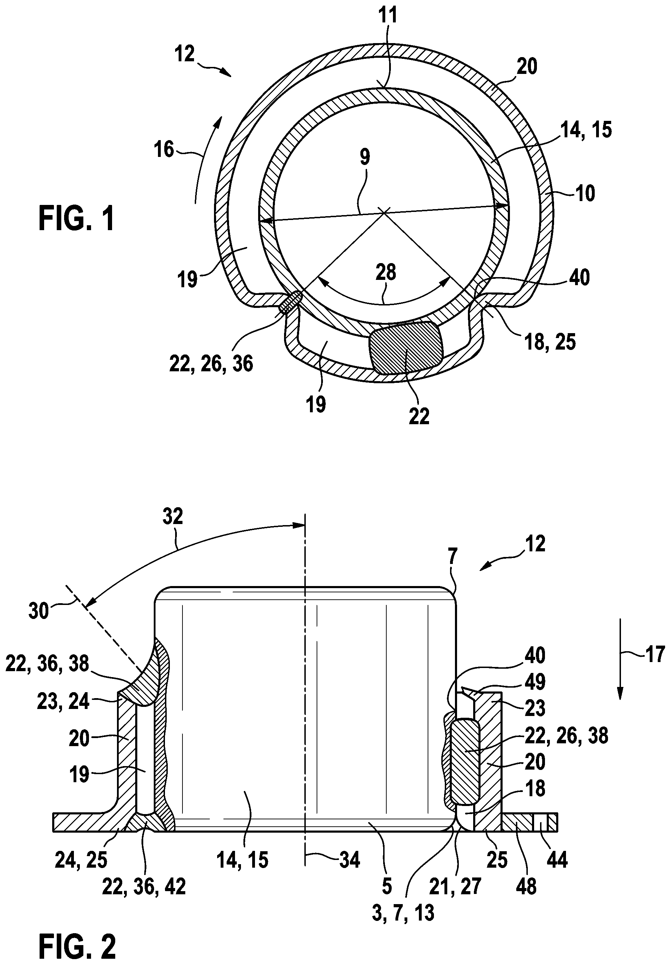

In Figur 1 ist eine elektrische Maschine 12 mit einem Befestigungsflansch 10 gezeigt. Der Befestigungsflansch 10 ist an einem zylinderförmigen Gehäuseteil 14 der elektrischen Maschine 12 angeordnet. Es sind aber auch andere Formen des Gehäuses denkbar, wie z.B. eckige, kastenförmige, vieleckige oder sonstige Formen, die den Anforderungen einer Vorrichtung entsprechen, mit der die elektrische Maschine 12 verbunden wird. Weiter weist die elektrische Maschine 12 ein Gehäuse 15 auf. Das Gehäuseteil 14 ist ein Teil des Gehäuses 15. Es ist eine Ausführungsform möglich, bei der das Gehäuseteil 14 nur einen axialen Abschnitt des Gehäuses 15 darstellt. Dabei kann das Gehäuseteil 14 in Umfangsrichtung 16 der elektrischen Maschine 12 geschlossen oder offen sein, wobei die Umfangsrichtung 16 im wesentlichen auch einen Umfang einer nicht kreisförmigen Querschnittsfläche umfasst, wie z.B. eines Rechtecks, eines Vielecks oder einer sonstigen geometrischen Form. Es sind Variationen des zylinderförmigen Gehäuseteils 14 möglich, die einen Gehäuseteildurchmesser 9 aufweisen, der gleich groß oder größer oder kleiner als der Gehäusedurchmesser des Gehäuses 15 ist. In Figur 1 ist das Gehäuseteil 14 als kreisrunder Poltopf einer elektrischen Maschine 12 dargestellt, der beispielsweise aus einem Tiefziehteil aus einem Blech gefertigt ist. Der Befestigungsflansch 10 umschließt das Gehäuseteil 14 wenigstens abschnittsweise in Umfangsrichtung 16. Der Befestigungsflansch 10 und/oder das Gehäuseteil 14 sind beschichtet. Hierzu ist die Beschichtung wenigstens einlagig und besteht aus wenigstens einem Material. Eine mögliche Beschichtung beinhaltet Zinn, Zink, Kupfer oder Chrom oder eine Kombination aus diesen Metallen. Der Befestigungsflansch 10 weist wenigstens eine radial nach innen gerichtete Erhebung 18 auf, wobei die Erhebung 18 an einer Umfangswand 11 des Gehäuseteils 14 anliegt. Es sind Ausführungsformen mit mehreren Erhebungen 18 möglich.

Die Erhebung 18 des Befestigungsflansches 10 erstreckt sich axial entlang des Gehäuseteils 14, insbesondere liegt die Erhebung 18 annähernd linienförmig an dem Gehäuseteil 14 an. Bei einer weiteren Ausführungsform ist die Erhebung 18 punktförmig und erstreckt sich nicht axial entlang eines Gehäuseteils 14. Somit bildet sich annähernd ein Anlagepunkt zwischen Gehäuseteil 14 und Erhebung 18 aus. Weiter ist eine Erhebung 18 möglich, die sich schraubenartig entlang des Gehäuseteils 14 axial windet und dementsprechend in schraubenartigen Linien an dem Gehäuseteil 14 anliegt. Die Erhebung 18 erstreckt sich entlang einer Axialrichtung 17, wie in Figur 2 gezeigt ist. In Figur 1 ist ein Querschnitt durch den Befestigungsflansch 10 dargestellt, der eine U-förmige Erhebung 18 zeigt. Solch eine Erhebung 18 kann als Pressrippe ausgebildet sein. Dabei geht die Erhebung 18 einstückig in den Befestigungsflansch 10 über. Der nach innen weisende radiale Scheitelpunkt der Erhebung 18 liegt dabei linienförmig an der Umfangswand 11 an. Grundsätzlich kann eine Erhebung 18 auch an zwei oder mehreren Gehäuseteilen 14 anliegen. Eine weitere Ausführungsform umfasst Erhebungen 18, die flächig an dem Gehäuseteil 14 anliegen.

Der Befestigungsflansch 10 ist aus einem kaltumgeformten z.B. gestanztem, gebogenem und tiefgezogenem Blechteil gefertigt. Während das Blechteil zum Befestigungsflansch 10 z.B. tiefgezogen wird, wird die Erhebung 18 ebenfalls durch einen plastischen Umformprozess 18 einstückig aus dem Blechteil ausgeformt. Dabei kann die Erhebung 18 und der Befestigungsflansch 10 mittels desselben Werkzeugs gefertigt werden. Die Erhebung 18 kann auf verschiedene Arten ausgestaltet sein. So ist eine Form der Erhebung 18 möglich, bei der nach der der Fertigstellung der Erhebung 18 das Blechteil aus dem es geformt ist kein Loch aufweist. Solch eine Erhebung 18 ist beulenförmig oder wellenförmig aus dem Blechteil geformt. Eine weitere Ausführungsform ist möglich, bei der die Erhebung 18 aus dem Blechteil ausgeschnitten ist, sodass das Blechteil mit der Erhebung 18 an wenigsten einer Stelle noch einstückig verbunden ist und das Blechteil wenigstens ein Loch aufweist. Der Befestigungsflansch 10 kann auch wenigstens teilweise zerspanend hergestellt werden.

Weiter weist der Befestigungsflansch 10 einen kreisförmigen Kragen 20 auf, der das Gehäuseteil 14 in Umfangsrichtung 16 vollständig umschließt. Es ist auch eine Ausführungsform denkbar, bei der der Kragen 20 das Gehäuseteil 14 nicht vollständig umschließt. Dabei erstreckt sich der Kragen 20 wenigstens abschnittsweise axial entlang des Gehäuseteils 14. Die Erhebung 18 ist aus dem Kragen 20 ausgeformt. Zwischen dem Kragen 20 und dem Gehäuseteil 14 ist ein radialer Spalt 19 ausgebildet, wobei sich der Spalt 19 in Umfangsrichtung 16 und in Axialrichtung 17 erstreckt. Bei einer Ausführungsform mit mehreren Erhebungen 18 umläuft der Spalt 19 das Gehäuseteil 14 von einer ersten Erhebung 18 bis zu einer zweiten Erhebung 18. Es ist eine Variante möglich, bei der der Spalt 19 axial nicht durchgehend ausgebildet ist. Die radiale Erstreckung der Erhebungen 18 bestimmt die radiale Größe des Spaltes 19. So liegt die Größe des Spaltes zwischen 0,01 mm bis 0,25 mm, vorzugsweise zwischen 0,02 mm bis 0,15 mm.

Der Befestigungsflansch 10 wird mittels eines Schweißverfahrens, wie Laserschweißen und/oder Widerstandsschweißen, an dem Gehäuseteil 14 befestigt.

Der Befestigungsflansch 10 wird mittels wenigstens einer Schweißnaht 22 an wenigstens einem axialen Ende 24 des Kragens 20 am Gehäuseteil 14 befestigt. Dabei erstreckt sich die Schweißnaht 22 zwischen dem Kragen 20 und dem Gehäuseteil 14. Der Kragen 20 und das Gehäuseteil 14 sind miteinander stoffschlüssig verbunden. Eine weitere Ausführungsform sieht wenigstens eine Überlappschweißnaht 26 vor. Die Überlappschweißnaht 26 sitzt an einem überlappenden Kontaktbereich 40, der sich dadurch auszeichnet, dass sich die Erhebung 18 und das Gehäuseteil 14 überlappen und gleichzeitig berühren. Dabei können Überlappschweißnähte 26 die Schweißnähte 22 an den axialen Enden ergänzen oder aber ersetzen. Die Überlappschweißnähte 26 werden insbesondere radial zur Umfangsrichtung 16 von außen an einer Erhebung 18 angebracht. Dabei bildet sich die Überlappschweißnaht 26 von einem Blech 25 der Erhebung 18 radial nach innen bis in das Gehäuseteil 14 aus, sodass eine stoffschlüssige Verbindung zwischen der Erhebung 18 und dem Gehäuseteil 14 entsteht. Dadurch wird der Befestigungsflansch 10 auf der elektrischen Maschine 12 fixiert.

Der Kragen 20 weist in einer bevorzugten Ausführungsvariante wenigstens zwei Erhebungen 18 auf. Die Erhebungen 18 sind durch einen Winkel 28 in Umfangsrichtung 16 voneinander getrennt. In Figur 2 ist gezeigt, wie die Schweißnaht 22 an einem Ende 24 des Kragens 20 zwischen den Erhebungen 18 in Umfangsrichtung 16 verläuft. Alternativ ist entlang der Schweißnaht 22 in Umfangsrichtung 16 wenigstens eine Erhebung 18 quer zur Schweißnaht 22 angeordnet. Vorzugsweise ist die Schweißnaht 22 in Umfangsrichtung 16 geschlossen. Die Schweißnaht 22 kann auch entlang des Kontaktbereichs 40 zwischen der Erhebung 18 und dem Gehäuseteil 14 in Axialrichtung 17 angeordnet sein.

In Figur 2 ist der Befestigungsflansch 10 gezeigt, wobei dieser an einer radial innenliegenden Kragenkante 27 an einem ersten Ende 25 des Kragens 20, der in Figur 1 gezeigt ist, einen Radius 21 oder eine fasenförmige Verflachung aufweist, die als Einführungsphase zur Montage des 10 auf das Gehäuseteil 14 dient. An dem Ende 25 ist somit radial innenliegend keine Ecke und kein Stanzgrat 49 vorhanden. Es ist eine Ausführungsform möglich, bei der nur ein Ende 25 einen Radius 21 und/oder fasenförmige Verflachung aufweist, sodass der Stanzgrat 49 an dem axial gegenüberliegenden Ende 23, 24 erhalten bleibt. Der Stanzgrat 49 steht radial nach innen vom Kragen 20 ab. Der Stanzgrat 49 kann zusätzlich noch axial vom Ende 24 abstehen. So ist der Stanzgrat 49 geringer vom der Umfangswand 11 beabstandet als der Kragen 20. Die Schweißnaht 22 ist dann vorzugsweise am Stanzgrat 49ausgebildet, entlang des Spalts 19 in Umfangsrichtung 16. Weiter ist denkbar, dass der Radius 21 sich bis zu einer radial außenliegenden Kragenkante 27 an einem der Enden 23, 25 wenigstens abschnittsweise erstreckt. Der Radius 21 oder eine fasenförmige Verflachung ist auch an wenigstens einem axialen Ende der Erhebung 18 angeformt. Weiter weist ein Gehäuse 15 der elektrischen Maschine 12 an einer radial außenliegenden Gehäusekante 13 einen Radius 7 oder eine Fase auf. Es ist auch möglich, dass das Gehäuseteil 14 einen Radius 21 oder eine Fase aufweist.

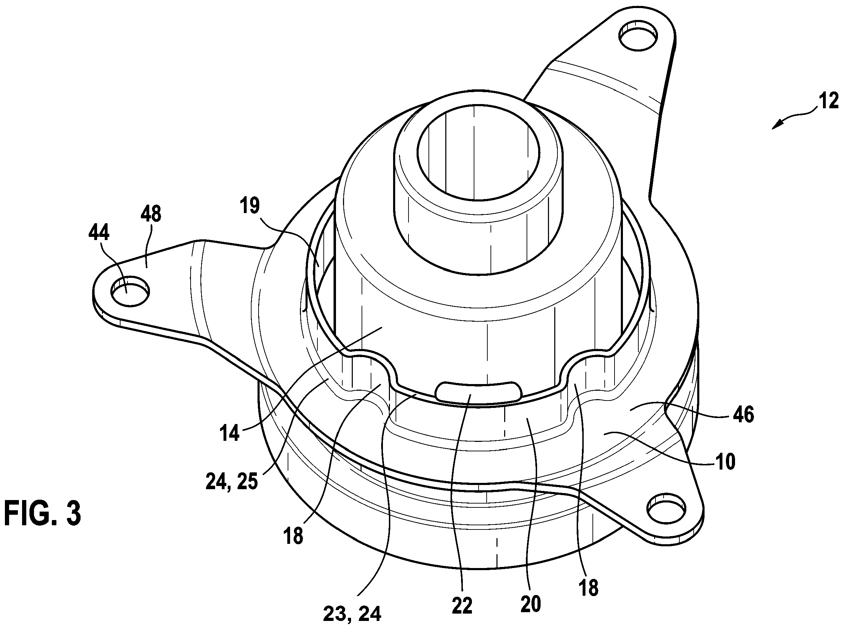

In Figur 3 ist eine elektrische Maschine 12 gezeigt, die einen Befestigungsflansch 10 aufweist, der an einem ersten Ende 25 wenigstens einen sich radial nach außen erstreckenden Fortsatz 44 aufweist. Der Fortsatz 48 ist quer zu einem Kragen 20 angeordnet. Der Kragen ist wie in Figur 2 ausgebildet und weist ebenso die Erhebungen 18 auf, die an einem Gehäuseteil 14 der elektrischen Maschine anliegen. Dadurch bildet sich der vorteilhafte Spalt 19 zwischen Kragen 20 und Gehäuseteil 14 aus. So kann erfindungsgemäß die Schweißnaht 22 an einem axialen Ende 23, 24 des Befestigungsflansches 10 zwischen den Erhebungen 18 angebracht werden. Dabei erstreckt sich die Schweißnaht 22 nicht bis zu den Erhebungen 18, sondern endet bevor sie die Erhebungen 18 berührt. Der Fortsatz 48 weist Aufnahmen 44 für Verbindungselemente auf. Eine weitere Ausführungsform weist vorzugsweise zwischen Kragen 20 und Fortsatz 48 ein Bund 46 auf. Der Bund 46 und der Fortsatz 48 liegen in zwei unterschiedlichen axialen Ebenen. Um dies zu erreichen, ist der Fortsatz 48 gekröpft. Alternativ weist der Bund 46 eine Kröpfung auf. Das Gehäuse 15 kann als Tiefziehteil gefertigt sein und den Poltopf einer elektrischen Maschine 12 darstellen.

Die elektrische Maschine 12 mit einem Befestigungsflansch 10 wird in Automobilen als Stellmotor, in ABS, in ESP und/oder als Motor in einem Kühlsystem verwendet. Dabei wird die elektrische Maschine 12 insbesondere als Stellmotor in elektrisch verstellbaren Getrieben verwendet. Die elektrische Maschine 12 ist jedoch nicht auf solche Anwendungen beschränkt. Weiter ist die elektrische Maschine 12 vorzugsweise als elektrisch kommutierte Maschine ausgeführt, aber auch als mechanisch kommutierte Maschine ausführbar.

Das Verfahren weist in einer bevorzugten Ausführungsform folgende Schritte auf:
- Positionieren eines Befestigungsflansches 10 an einer elektrischen Maschine 12. Das Positionieren kann durch eine Maschine oder von Hand erfolgen. Auf diese Weise wird ein Kragen 20 mit Erhebungen 18 an einem Gehäuseteil 14 angeordnet, wobei die Erhebungen 18 an dem Gehäuseteil 14 anliegen. Dabei sind unterschiedliche Gestaltungen der Erhebungen 18 entsprechend der vorherig beschriebenen Vorrichtungsmerkmale möglich. Dabei zentrieren die Erhebungen 18 das Gehäuseteil 14 im Befestigungsflansch 10. Wenn der Abstand zwischen den Erhebungen 18 kleiner gewählt wird als der Durchmesser 9 des Gehäuseteils 14, kann der Befestigungsflansch auf dem Gehäuseteil 14 vorfixiert werden.
- Anbringen von wenigstens einer Schweißnaht 22, 38, 42 an wenigstens einem axialen Ende 23, 24, 52 des Kragens 20.
- Die Schweißnaht 22, 26, 38 kann auch an einer Erhebung 18 des Befestigungsflansches 10, gemäß der vorherigen Vorrichtungsmerkmale angeordnet sein. Die Schweißnaht 22, 26 an der Erhebung 18 wird insbesondere radial zur Umfangsrichtung 16 von außen angebracht, sodass ein Schweißwerkzeug nicht an das Gehäuseteil 14 herangeführt wird, sondern sich zwischen Gehäuseteil 14 und Schweißwerkzeug ein Blech 25 der Erhebung 18 befindet. Auf diese Verfahrensweise schweißt das Schweißwerkzeug durch ein Blech 25 des Befestigungsflansches 10, welches die Erhebung 18 bildet, hindurch und verbindet die Erhebung 18 mit dem Gehäuseteil 14. Dabei muss eine durch das Schweißen entstandene Schmelze 36 des Blechs 25 sich mit der Schmelze 36 des Gehäuseteils 14 verbinden.

Der Befestigungsflansch 10 wird mittels eines Schweißverfahrens, wie Laserschweißen und/oder Widerstandsschweißen, an dem Gehäuseteil 14 befestigt. In einer bevorzugten Ausführungsform geschieht das Schweißen in einem vollautomatischen Verfahren.

Bei der Ausführungsvariante, wie in Figur 2 gezeigt, ist die Schweißnaht 22 eine Stumpfstoßnaht 42, bei der eine durch das Schweißverfahren entstandene Schmelze 36 vollständig zwischen den Kragen 20 und das Gehäuseteil 14 gezogen wird, ohne dass die Schmelze 36 den Kragen 20 oder das Gehäuseteil 14 in Axialrichtung 17 überragt. Um eine Stumpfstoßnaht 42 zu erzeugen, muss ein axiales Ende 24 des Befestigungsflansches 10 in Axialrichtung 17 direkt an einem axialen Ende 5 des Gehäuses 15 liegen, also bündig sein. Weiter ist eine Variante möglich, bei der die Schweißnaht 22 eine Kehlnaht 38 ist, bei der sich die Schmelze 36 radiusförmig zwischen dem Kragen 20 und dem Gehäuseteil 14 ausbildet und nicht vollständig zwischen den Kragen 20 und das Gehäuseteil 14 gezogen wird. Hierzu muss das Gehäuseteil 14 eines der axialen Enden 24 axial überragen, so wie in Figur 2 zu sehen ist. Alternativ ist die Schweißnaht 22 eine Überlappschweißnaht 26, bei der die Überlappschweißnaht 26 von außen an einem überlappenden Kontaktbereich 40 der Erhebung 18 und des Gehäuseteils 14 angebracht wird.

Bevorzugt wird das Laserschweißen eingesetzt, wie in Figur 2 gezeigt. Hierbei wird ein Laser 30 gegen eine Motorachse 34, die sich in Axialrichtung 17 erstreckt, verkippt. So schließt der Laser 30 mit der Motorachse 34 bevorzugt einen Schweißwinkel 32 von 10° bis 80° ein. Um die Kehlnaht 38 zu fertigen, wird der Laser auf einen Winkel 32 von 30° bis 40° eingestellt. Für eine Überlappschweißnaht 26 wird der Laser 30 auf einen Winkel 32 von 70° bis 90° und für eine Stumpfstoßnaht 42 auf einen Winkel 32 von 0° bis 20° eingestellt. Dabei ist der Winkel 0°, wenn der Laser exakt mit der Motorachse 34 fluchtet.

Es sei angemerkt, dass hinsichtlich der in den Figuren und in der Beschreibung gezeigten Ausführungsbeispiele vielfältige Kombinationsmöglichkeiten der einzelnen Merkmale untereinander möglich sind.

## Patentansprüche

1. Elektrische Maschine (12) mit einem Befestigungsflansch (10), wobei der Befestigungsflansch (10) an einem - vorzugsweise zylinderförmigen- Gehäuseteil (14) der elektrischen Maschine (12) derart angeordnet ist, dass der Befestigungsflansch (10) das Gehäuseteil (14) wenigstens abschnittsweise in Umfangsrichtung (16) des Gehäuseteils (14) umschließt, wobei der Befestigungsflansch (10) und/oder das Gehäuseteil (14) beschichtet sind, wobei der Befestigungsflansch (10) mittels eines Schweißverfahrens an dem Gehäuseteil (14) befestigt ist, **dadurch gekennzeichnet, dass** der Befestigungsflansch (10) wenigstens eine radial gerichtete Erhebung (18) aufweist, die an dem Gehäuseteil (14) anliegt.

2. Elektrische Maschine (12) nach Anspruch 1, **dadurch gekennzeichnet, dass** sich die Erhebung (18) des Befestigungsflansches (10) axial entlang des Gehäuseteils (14) erstreckt, und insbesondere dass die Erhebung (18) annähernd linienförmig an dem Gehäuseteil (14) anliegt.

3. Elektrische Maschine (12) nach Anspruch 1 oder 2, **dadurch gekennzeichnet, dass** der Befestigungsflansch (10) aus einem -insbesondere kaltumgeformten z.B. gestanztem, gebogenem und tiefgezogenem- Blechteil gefertigt ist, wobei die Erhebung (18) einstückig aus dem Blechteil geformt ist.

4. Elektrische Maschine (12) nach einem der vorhergehenden Ansprüchen, **dadurch gekennzeichnet, dass** das Gehäuseteil (14) eine Erhebung aufweist, die sich axial entlang des Gehäuseteils (14) erstreckt und die an dem Befestigungsflansch (10) anliegt, und insbesondere dass die Erhebung (18) annähernd linienförmig an Befestigungsflansch (10) anliegt.

5. Elektrische Maschine (12) nach einem der vorhergehenden Ansprüchen, **dadurch gekennzeichnet, dass** der Befestigungsflansch (10) einen kreisförmigen Kragen (20) aufweist, der das Gehäuseteil (14) in Umfangsrichtung (16) umschließt, wobei sich der Kragen (20) wenigstens abschnittsweise axial entlang des Gehäuses (14) erstreckt, und die Erhebung (18) aus dem Kragen (20) geformt ist, und dass zwischen dem Kragen (20) und dem Gehäuseteil (14) ein radialer Spalt (19) ausgebildet ist, wobei sich der Spalt (19) in Umfangsrichtung (16) und in Axialrichtung (17) erstreckt.

6. Elektrische Maschine (12) nach einem der vorhergehenden Ansprüchen, **dadurch gekennzeichnet, dass** an einem axialen Ende (24) des Kragens (20) ein Stanzgrat (49) angeformt ist, an dem mittels Laserschweißen eine Schweißnaht (22) angebracht ist, wodurch der Befestigungsflansch (10) an dem Gehäuseteil (14) befestigt ist.

7. Elektrische Maschine (12) nach einem der vorhergehenden Ansprüchen, **dadurch gekennzeichnet, dass** der Befestigungsflansch (10) mittels wenigstens einer Überlappschweißnaht (26), die -insbesondere radial von außen- an einer Erhebung (18) angebracht ist, am Gehäuseteil (14) befestigt ist.

8. Elektrische Maschine (12) nach einem der vorhergehenden Ansprüchen, **dadurch gekennzeichnet, dass** der Kragen (20) wenigstens zwei Erhebungen (18) aufweist, wobei die Erhebungen (18) durch einen Winkel (28) in Umfangsrichtung (16) voneinander getrennt sind, und die Schweißnaht (22) zwischen den Erhebungen (18) an dem axialen Ende (24) des Kragens (20) verläuft, und vorzugsweise die Schweißnaht (22) in Umfangsrichtung (16) geschlossen ausgebildet ist.

9. Elektrische Maschine (12) nach einem der vorhergehenden Ansprüchen, **dadurch gekennzeichnet, dass** der Befestigungsflansch (10) an einem Ende (24) des Kragens (20) radial innenliegend einen Radius (21) oder eine fasenförmige Verflachung aufweist und/oder ein Gehäuse (15) der elektrischen Maschine (12) an einer radial außenliegenden Kante (13) einen Radius oder eine fasenförmige Verflachung aufweist, die als axial Einführhilfe dienen.

10. Elektrische Maschine (12) nach einem der vorhergehenden Ansprüchen, **dadurch gekennzeichnet, dass** der Befestigungsflansch (10) an dem ersten Ende (25) wenigstens einen sich radial nach außen erstreckenden Fortsatz (48) aufweist, sodass der Fortsatz (48) quer zum Kragen (20) angeordnet ist, wobei der Fortsatz (48) Aufnahmen (44) für Verbindungselemente aufweist -wobei vorzugsweise zwischen Kragen (20) und Fortsatz (48) ein Bund (46) angeordnet ist -und insbesondere der Bund (46) und der Fortsatz (48) in zwei unterschiedlichen axialen Ebenen liegen, wobei der Fortsatz (48) insbesondere gekröpft ist.

11. Elektrische Maschine (12) mit einem Befestigungsflansch (10) nach den vorherigen Ansprüchen, wobei die elektrische Maschine (12) in Automobilen als Stellmotor, in ABS, in ESP und/oder als Motor in einem Kühlsystem verwendet wird, wobei das Gehäuseteil (14) als -vorzugsweise tiefgezogener- Poltopf aus Metall ausgebildet ist.

12. Verfahren zum Herstellen einer elektrische Maschine (12) mit dem Befestigungsflansch (10), **gekennzeichnet durch**,
- Positionieren eines Befestigungsflansches (10) an einer Umfangswand (11) einer elektrischen Maschine (12), sodass ein Kragen (20) des Befestigungsflansches (10) mittels Erhebungen (18) radial an der Umfangswand (11) anliegt.
- Anbringen von wenigstens einer Schweißnaht (22, 38, 42) an wenigstens einem axialen Ende (23, 24, 25) des Kragens (20).

13. Verfahren nach Anspruch 12, **dadurch gekennzeichnet, dass** der Befestigungsflansch (10) an dem Gehäuseteil (14) der elektrischen Maschine (12) mittels Laserschweißens befestigt wird, und die Scheißnaht (22) in Umfangsrichtung (17) an einem axialen Ende (23, 24, 25) des Kragens (20) ausgebildet wird.

14. Verfahren nach Anspruch 12 oder 13, **dadurch gekennzeichnet, dass** die Schweißnaht (22) eine Stumpfstoßnaht (42) und/oder eine Kehlnaht (38) ist, die an einem axialen Ende (24) des Kragens (20) angeschweißt wird, und/oder die Schweißnaht (22) eine Überlappschweißnaht (26) ist, an einem überlappenden Bereich des Kragens (20) und des Gehäuseteils (14) angeschweißt wird.

15. Verfahren nach einem der vorherigen Ansprüche, **dadurch gekennzeichnet, dass** beim Laserschweißen ein Laser (30) einen Schweißwinkel (32) von 10° bis 80° - vorzugsweise aber von 30° bis 50°- zu einer Motorachse (34) einschließt, die sich in Axialrichtung (17) erstreckt.

16. Verfahren nach einem der vorherigen Ansprüche, **dadurch gekennzeichnet, dass** der Befestigungsflansch (10) ein kaltumgeformtes Blechteil ist, das mittels einem Tiefziehverfahren gefertigt wird, wobei wenigstens eine Erhebung (18) einstückig mit dem Befestigungsflansch (10) ausgebildet wird, wobei der Befestigungsflansch (10) und/oder das Gehäuseteil (14) eine Beschichtung aufweisen, die Zinn, Zink, Nickel, Chrom oder Kupfer beinhaltet.

## Claims

1. Electric machine (12) having a mounting flange (10), wherein the mounting flange (10) is arranged on a (preferably cylindrical) housing part (14) of the electric machine (12) in such a way that the mounting flange (10) at least in portions surrounds the housing part (14) in the peripheral direction (16) of the housing part (14), wherein the mounting flange (10) and/or the housing part (14) are/is coated, wherein the mounting flange (10) is mounted on the housing part (14) by means of a welding process, **characterized in that** the mounting flange (10) has at least one radially directed raised portion (18), which abuts the housing part (14).

2. Electric machine (12) according to Claim 1, **characterized in that** the raised portion (18) of the mounting flange (10) extends axially along the housing part (14), and in particular **in that** the raised portion (18) abuts the housing part (14) approximately linearly.

3. Electric machine (12) according to Claim 1 or 2, **characterized in that** the mounting flange (10) is produced from a sheet metal part, which in particular is cold-formed, for example stamped, bent and deep drawn, wherein the raised portion (18) is formed in one piece from the sheet metal part.

4. Electric machine (12) according to one of the preceding claims, **characterized in that** the housing part (14) has a raised portion, which extends axially along the housing part (14) and which abuts the mounting flange (10), and in particular **in that** the raised portion (18) abuts the mounting flange (10) approximately linearly.

5. Electric machine (12) according to one of the preceding claims, **characterized in that** the mounting flange (10) has a circular collar (20), which surrounds the housing part (14) in the peripheral direction (16), wherein the collar (20) extends at least in portions axially along the housing (14), and the raised portion (18) is formed from the collar (20), and **in that** a radial gap (19) is formed between the collar (20) and the housing part (14), wherein the gap (19) extends in the peripheral direction (16) and in the axial direction (17).

6. Electric machine (12) according to one of the preceding claims, **characterized in that** a stamping burr (49) is integrally molded on an axial end (24) of the collar (20), to which stamping burr a weld seam (22) is applied by means of laser welding, whereby the mounting flange (10) is mounted on the housing part (14).

7. Electric machine (12) according to one of the preceding claims, **characterized in that** the mounting flange (10) is mounted on the housing part (14) by means of at least one lap weld seam (26), which is applied to a raised portion (18), in particular radially from the outside.

8. Electric machine (12) according to one of the preceding claims, **characterized in that** the collar (20) has at least two raised portions (18), wherein the raised portions (18) are separated from one another in the peripheral direction (16) by an angle (28), and the weld seam (22) extends between the raised portions (18) at the axial end (24) of the collar (20), and the weld seam (22) is preferably closed in the peripheral direction (16).

9. Electric machine (12) according to one of the preceding claims, **characterized in that** the mounting flange (10) has, radially inwardly at one end (24) of the collar (20), a radius (21) or a chamfer-shaped flattening and/or a housing (15) of the electric machine (12) has, on a radially outer edge (13), a radius or a chamfer-shaped flattening, which serve as axial insertion aids.

10. Electric machine (12) as claimed one of the preceding claims, **characterized in that** the mounting flange (10) has, at the first end (25), at least one radially outwardly extending extension (44), such that the extension (48) is arranged transversely to the collar (20), wherein the extension (48) has receptacles (44) for connection elements - wherein a band (46) is preferably arranged between the collar (20) and extension (48) - and in particular the band (46) and the extension (48) lie in two different axial planes, wherein the extension (48) is offset in particular.

11. Electric machine (12) having a mounting flange (10) according to the preceding claims, wherein the electric machine (12) is used in cars as a servo motor, in ABS, in ESP and/or as a motor in a cooling system, wherein the housing part (14) is formed as a (preferably deep drawn) pole-well made of metal.

12. Method for producing an electric machine (12) having a mounting flange (10) according to one of the preceeding claims, **characterized by**
- Positioning a mounting flange (10) on a peripheral wall (11) of an electric machine (12), such that a collar (20) of the mounting flange (10) abuts the peripheral wall (11) radially by means of raised portions (18).
- Applying at least one weld seam (22, 38, 42) to at least one axial end (23, 24, 52) of the collar (20).

13. Method according to Claim 12, **characterized in that** the mounting flange (10) is mounted on the housing part (14) of the electric machine (12) by means of laser welding, and the weld seam (22) is formed in the peripheral direction (17) at an axial end (23, 24, 25) of the collar (20).

14. Method according to Claim 12 or 13, **characterized in that** the weld seam (22) is a butt joint seam (42) and/or a fillet seam (38), which is welded on at an axial end (24) of the collar (20), and/or the weld seam (22) is a lap weld seam (26), which is welded on at an overlapping region of the collar (20) and of the housing part (14).

15. Method according to one of the preceding claims, **characterized in that**, in the case of laser welding, a laser (30) encloses a welding angle (32) from 10° to 80°, but preferably from 30° to 50°, relative to a motor axis (34) which extends in the axial direction (17).

16. Method according to one of the preceding claims, **characterized in that** the mounting flange (10) is a cold-formed sheet metal part, which is produced by means of a deep drawing method, wherein at least one raised portion (18) is formed in one piece with the mounting flange (10), wherein the mounting flange (10) and/or the housing part (14) have/has a coating which contains tin, zinc, nickel, chromium or copper.

## Revendications

1. Machine électrique (12) comportant une bride de fixation (10), dans laquelle la bride de fixation (10) est disposée sur une partie de boîtier (14) - de préférence cylindrique - de la machine électrique (12), de telle manière que la bride de fixation (10) encercle la partie de boîtier (14) au moins en partie dans la direction périphérique (16) de la partie de boîtier (14), dans laquelle la bride de fixation (10) et/ou la partie de boîtier (14) sont revêtues, dans laquelle la bride de fixation (10) est fixée à la partie de boîtier (14) au moyen d'un procédé de soudage, **caractérisée en ce que** la bride de fixation (10) présente au moins une surélévation orientée radialement (18), qui s'applique sur la partie de boîtier (14).

2. Machine électrique (12) selon la revendication 1, **caractérisée en ce que** la surélévation (18) de la bride de fixation (10) s'étend axialement le long de la partie de boîtier (14), et en particulier **en ce que** la surélévation (18) s'applique approximativement sous la forme d'une ligne sur la partie de boîtier (14).

3. Machine électrique (12) selon la revendication 1 ou 2, **caractérisée en ce que** la bride de fixation (10) est fabriquée à partir d'une pièce de tôle - en particulier déformée à froid, par exemple découpée, cintrée et emboutie -, dans laquelle la surélévation (18) est formée d'une seule pièce à partir de la pièce de tôle.

4. Machine électrique (12) selon l'une quelconque des revendications précédentes, **caractérisée en ce que** la partie de boîtier (14) présente une surélévation, qui s'étend axialement le long de la partie de boîtier (14) et qui s'applique sur la bride de fixation (10), et en particulier **en ce que** la surélévation (18) s'applique approximativement sous la forme d'une ligne sur la bride de fixation (10).

5. Machine électrique (12) selon l'une quelconque des revendications précédentes, **caractérisée en ce que** la bride de fixation (10) présente un collet circulaire (20), qui entoure la partie de boîtier (14) dans la direction périphérique (16), dans laquelle le collet (20) s'étend au moins en partie axialement le long du boîtier (14), et la surélévation (18) est formée hors du collet (20), et **en ce qu'**une fente radiale (19) est formée entre le collet (20) et la partie de boîtier (14), dans laquelle la fente (19) s'étend en direction périphérique (16) et en direction axiale (17).

6. Machine électrique (12) selon l'une quelconque des revendications précédentes, **caractérisée en ce qu'**une bavure de découpage (49) est formée sur une extrémité axiale (24) du collet (20), sur laquelle un cordon de soudure (22) est déposé par soudage au laser, par laquelle la bride de fixation (10) est fixée à la partie de boîtier (14).

7. Machine électrique (12) selon l'une quelconque des revendications précédentes, **caractérisée en ce que** la bride de fixation (10) est fixée à la partie de boîtier (14) au moyen d'au moins un cordon de soudure à recouvrement (26), qui est déposé - en particulier radialement de l'extérieur - sur une surélévation (18).

8. Machine électrique (12) selon l'une quelconque des revendications précédentes, **caractérisée en ce que** le collet (20) présente au moins deux surélévations (18), dans laquelle les surélévations (18) sont séparées l'une de l'autre en direction périphérique (16) par un angle (28), et le cordon de soudure (22) s'étend entre les surélévations (18) sur l'extrémité axiale (24) du collet (20), et le cordon de soudure (22) est de préférence fermé en direction périphérique (16).

9. Machine électrique (12) selon l'une quelconque des revendications précédentes, **caractérisée en ce que** la bride de fixation (10) présente à une extrémité (24) du collet (20) en position radialement intérieure un rayon (21) ou un méplat de type chanfrein et/ou un boîtier (15) de la machine électrique (12) présente à une arête (13) située radialement à l'extérieur un rayon ou un méplat de type chanfrein, qui servent d'aide pour l'introduction axiale.

10. Machine électrique (12) selon l'une quelconque des revendications précédentes, **caractérisée en ce que** la bride de fixation (10) présente à la première extrémité (25) au moins un prolongement (44) s'étendant radialement vers l'extérieur, de telle manière que le prolongement (48) soit disposé transversalement au collet (20), dans laquelle le prolongement (48) présente des logements (44) pour des éléments d'assemblage - dans lequel un rebord (46) est de préférence disposé entre le collet (20) et le prolongement (48) - et en particulier le rebord (46) et le prolongement (48) sont situés dans des plans axialement différents, dans laquelle le prolongement (48) est en particulier coudé.

11. Machine électrique (12) avec une bride de fixation (10) selon l'une quelconque des revendications précédentes, dans laquelle la machine électrique (12) est utilisée dans des automobiles comme servomoteur dans des ABS et des ESP et/ou comme moteur dans un système de refroidissement, dans laquelle la partie de boîtier (14) est réalisée sous la forme d'un pot polaire en métal - de préférence embouti.

12. Procédé de fabrication d'une machine électrique (12) avec une bride de fixation (10) selon l'une quelconque des revendications précédentes, **caractérisé par** les étapes suivantes:
- positionnement d'une bride de fixation (10) sur une paroi périphérique (11) d'une machine électrique (12), de telle manière qu'un collet (20) de la bride de fixation (10) s'applique radialement sur la paroi périphérique (11) au moyen de surélévations (18),
- dépôt d'au moins un cordon de soudure (22, 38, 42) sur au moins une extrémité axiale (23, 24, 52) du collet (20).

13. Procédé selon la revendication 12, **caractérisé en ce que** l'on fixe la bride de fixation (10) sur la partie de boîtier (14) de la machine électrique (12) par soudage au laser, et on forme le cordon de soudure (22) en direction périphérique (17) sur une extrémité axiale (23, 24, 25) du collet (20).

14. Procédé selon la revendication 12 ou 13, **caractérisé en ce que** le cordon de soudure (22) est une soudure bout à bout (42) et/ou une soudure d'angle (38), qui est formée sur une extrémité axiale (24) du collet (20) et/ou le cordon de soudure (22) est un cordon de soudure à recouvrement (26), qui est formé sur une région de recouvrement du collet (20) et de la partie de boîtier (14).

15. Procédé selon l'une quelconque des revendications précédentes, **caractérisé en ce que** lors du soudage au laser un laser (30) forme un angle de soudage (32) de 10° à 80° - mais de préférence de 30° à 50° - avec un axe de moteur (34), qui s'étend en direction axiale (17).

16. Procédé selon l'une quelconque des revendications précédentes, **caractérisé en ce que** la bride de fixation (10) est une pièce de tôle déformée à froid, qui est fabriquée par un procédé d'emboutissage profond, dans lequel au moins une surélévation (18) est formée d'une seule pièce avec la bride de fixation (10), dans lequel la bride de fixation (10) et/ou la partie de boîtier (14) présente(nt) un revêtement, qui contient de l'étain, du zinc, du nickel, du chrome ou du cuivre.
